# EUROPÄISCHE PATENTSCHRIFT

(11) **EP 1 967 282 B1**
(45) Veröffentlichungstag und Bekanntmachung des Hinweises auf die Patenterteilung: **30.12.2009**
(21) Anmeldenummer: 07103845.9
(22) Anmeldetag: 09.03.2007
(51) Int. Cl.: B05C 11/10, B29B 13/02

(54) **Vorrichtung zum Bereitstellen eines geschmolzenen, fliessfähigen Mediums**
Device for providing a melted medium capable of flow
Dispositif destiné à la préparation d'un matériau fondu fluide

(43) Veröffentlichungstag der Anmeldung: 10.09.2008
(73) Patentinhaber: Robatech AG, 5630 Muri (CH)
(72) Erfinder: Schoch, Beat, 5647 Oberrüti (CH); Kappeler Roman, 5630 Muri (CH)
(74) Vertreter: OK pat AG

(56) Entgegenhaltungen:
- EP-A- 0 362 802
- EP-A- 1 447 143
- EP-B1- 0 395 715
- DE-U1-202004 001 038
- DE-U1-202006 017 808

## Beschreibung

Die Erfindung betrifft eine Vorrichtung zum Bereitstellen eines geschmolzenen, fliessfähigen Mediums gemäss Oberbegriff des Hauptanspruchs. Die vorliegende Erfindung bezieht sich insbesondere auf Vorrichtungen zum Bereitstellen von unterschiedlichen Mengen fliessfähigen Mediums, insbesondere von Klebstoff, Beschichtungs- oder Dichtmasse.

### Hintergrund der Erfindung, Stand der Technik

In zahlreichen industriellen Prozessen kommen Klebstoffe, Dichtmassen und ähnliche Medien zur Anwendung, die in flüssiger Form auf ein Werkstück aufgetragen bzw. aufgespritzt werden.

Klebstoffe und andere Massen mit sich bei ändernder Temperatur verändernder Viskosität, werden dem Verbraucher üblicherweise in fester Form oder hochviskosem Zustand angeliefert und werden in einen Behälter gefüllt, der im Allgemeinen oben eine weite Behälteröffnung aufweist. Der Klebstoff, bzw. die Masse, muss dann vor seiner Abgabe in dem Behälter, im Allgemeinen durch Wärmezufuhr, verflüssigt werden.

Üblicherweise wird der Behälter nach dem Einfüllen des Klebstoffs, bzw. der Masse, mit einer sogenannten Folgeplatte versehen, deren Aussenkontur dem Querschnitt der Behälterinnenfläche entspricht, und die sich durch die Behälteröffnung in den Behälter abgesenkt. Die Masse wird dann erwärmt und unter dem Druck der Folgeplatte und unter der Wirkung einer Förderpumpe über die Leitungseinheit aus dem Behälter abgegeben, um an den Ort ihrer Verwendung gebracht zu werden, während die Folgeplatte nach und nach immer weiter in den Behälter einfährt. Ein Beispiel eines solchen Systems mit einer speziellen Regelung für die Entnahme des Klebstoffs ist dem deutschen Gebrauchsmuster DE 20 2006 017 808.2 zu entnehmen.

Die Verarbeitung von derartigen Medien ist nicht ganz unproblematisch, da die geeigneten Stoffe oft einer starken Veränderung der Fliessfähigkeit (Viskosität), zum Beispiel bei Aufnahme von Feuchtigkeit, unterliegen. Die geeigneten Stoffe, wie zum Beispiel Polyurethan (PU oder PUR genannt) sind feuchtigkeitsvernetzend (feuchtigkeitsempfindlich) und beginnen auszuhärten, sobald sie mit Feuchtigkeit in Kontakt kommen.

Seit einiger Zeit kommt insbesondere Polyurethanleim (PUR) als Klebstoff besonderer Güte zum Einsatz. Bei PUR findet eine Vernetzung statt, die bereits bei tiefen Temperaturen (ungefähr 80°C) beginnt. Je höher die Temperatur des PURs ansteigt, desto schneller vernetzt das PUR und die Viskosität nimmt zu. PUR hat den Nachteil, dass Feuchtigkeit, z.B. Feuchtigkeit aus der Umgebungsluft, eine Beschleunigung der Vernetzung bewirkt. Dies führt zu verschiedenen Problemen. Als Beispiel ist der grosse Reinigungsaufwand des Behälters und aller anderen Komponenten zu nennen. Es muss zum Beispiel sicher gestellt werden, dass der PUR Leim nicht im Behälter oder an anderen Stellen des Systems aushärtet, da er nicht mehr fliessfähig gemacht werden kann, oder da das mehrfache Aufschmelzen die Eigenschaften des PURs verändert. Es soll deshalb immer nur so viel PUR Leim aus dem Behälter entnommen werden wie aktuell zu verarbeiten ist.

Deshalb stellt sich die Aufgabe eine Vorrichtung und entsprechende Systeme zu schaffen, bei denen jeweils nur so viel Medium geschmolzen wird, wie benötigt. Mit geeigneten Mittel soll verhindert werden, dass das Medium mit Feuchtigkeit in Verbindung gerät, bevor es den Auftragsort erreicht hat. Die Vorrichtung soll speziell für feuchtigkeitsvernetzende Medien, z.B. PU-basierte Medien, und Klebstoffe ausgelegt sein, die mit katalysierenden Gasen reagieren.

Es wird als eine weitere Aufgabe der Erfindung angesehen, eine Vorrichtung bereit zu stellen, die ein problemloses Befüllen mit Leimkerzen oder Granulat in Inliner-Säcken ermöglicht.

Das Dokument DE 20 2004 001 038 U1 betrifft einen Kolbenschmelzer mit zwei nebeneinander angeordneten Fassschmelzern. Die beiden Fassschmelzer sind oberhalb eines Klebersammelbeckens angeordnet. Beide Fassschmelzer sind über ein Scharnier abklappbar an dem Kolbenschmelzer gelagert. Gemäss diesem Gebrauchsmuster werden die Kolben der Fassschmelzer durch Steuerung der Luftzufuhr bewegt.

In einem weiteren Dokument DE 20 2006 017 808 U1 wird eine andere Fassschmelzanlage mit sogenannter Folgeplatte beansprucht. Die Folgeplatte samt Inlinerpresse sind um eine vertikale Achse wegschwenkbar, um von oben her Medium in die Fassschmelzanlage füllen zu können. Zum Reinigen kann der Aufnahmebehälter vom Schmelzbereich abgenommen werden. Am Aufnahmebehälter sind Bremsen vorgesehen, um zu verhindern, dass nach dem Abschalten des Schmelzbereichs weiter Klebstoff nachrutscht und geschmolzen wird.

### Zusammenfassung der Erfindung

Die Aufgabe wird gelöst durch eine Vorrichtung nach Anspruch 1.

Eine erfindungsgemässe Vorrichtung zum Bereitstellen eines geschmolzenen, fliessfähigen Mediums weist die Merkmale von Anspruch 1 auf.

In den Unteransprüchen sind weitere vorteilhafte Ausgestaltungsformen der Erfindung aufgeführt.

### Abbildungen

Im Folgenden werden weitere Einzelheiten und Vorteile der Erfindung anhand von Ausführungsbeispielen und teilweise mit Bezug auf die Zeichnung ausführlich beschrieben. Alle Figuren sind schematisiert und nicht maßstäblich, und entsprechende konstruktive Elemente sind in den verschiedenen Figuren mit gleichen Bezugszeichen versehen, auch wenn sie im Einzelnen unterschiedlich gestaltet sind. Es zeigen:
- **Fig. 1**: eine erste Ausführungsform der Erfindung in eine perspektivischen Draufsicht, wobei die Vorrichtung geöffnet ist (Nachfüllstellung genannt);
- **Fig. 2**: eine Seitenansicht der ersten Ausführungsform in eingeschwenkter Stellung;
- **Fig. 3**: eine Schnittansicht durch den Kerzenhalter der ersten Ausführungsform bevor die Klebstoffkerze eingebracht wird;
- **Fig. 4**: eine Schnittdarstellung des Kerzenhalters und des Schwenkmechanismus der ersten Ausführungsform;
- **Fig. 5**: eine Schnittdarstellung der gesamten ersten Ausführungsform in Arbeitsstellung (ohne Klebstoffkerze);
- **Fig. 6**: ein vergrösserter Ausschnitt eines Teils der ersten Ausführungsform, nämlich des Druckausgleichs mit einem Trockenbehälter;
- **Fig. 7**: eine Darstellung eines Kerzenhalters einer nicht erfindungsgemäßen Ausführungsform;
- **Fig. 8**: eine Darstellung eines Kerzenhalters einer weiteren Ausführungsform.

### Detaillierte Beschreibung der Ausführungsbeispiele

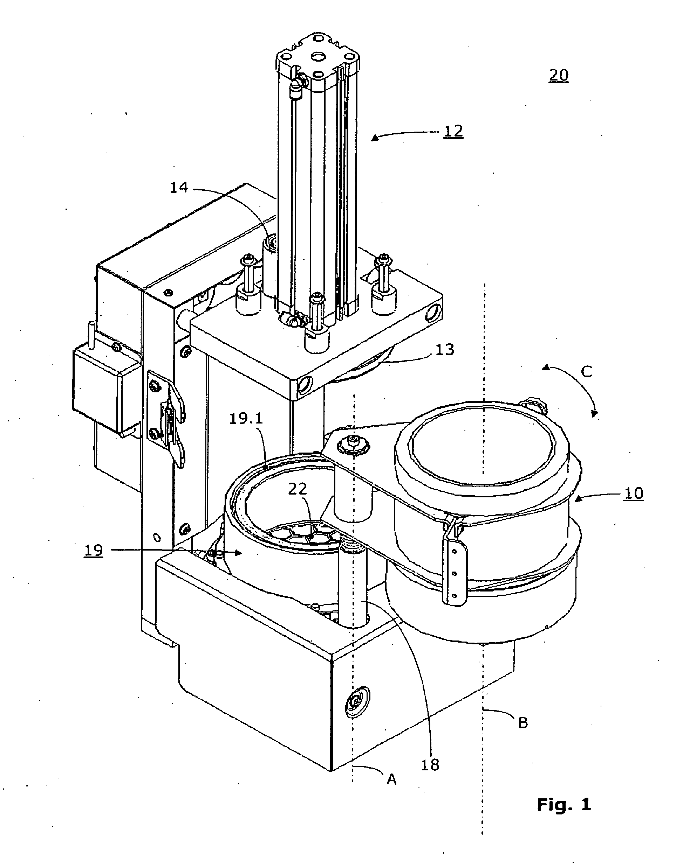

Die Erfindung betrifft eine Vorrichtung 20 zur Verwendung in einem System, das ein Medium (z.B. Klebstoff, Beschichtungs- oder Dichtungsmasse) verarbeitet, wie beispielhaft in den Fig. 1 bis 8 gezeigt.

Fig. 1 ist eine perspektivische Ansicht der wesentlichen Elemente einer Vorrichtung 20, die ein solches Medium verarbeitet. Die Vorrichtung 20 kann Teil eines Gesamtsystems sein, das zum Beispiel Produkte bearbeitet und in einem Schritt Klebstoff aufträgt.

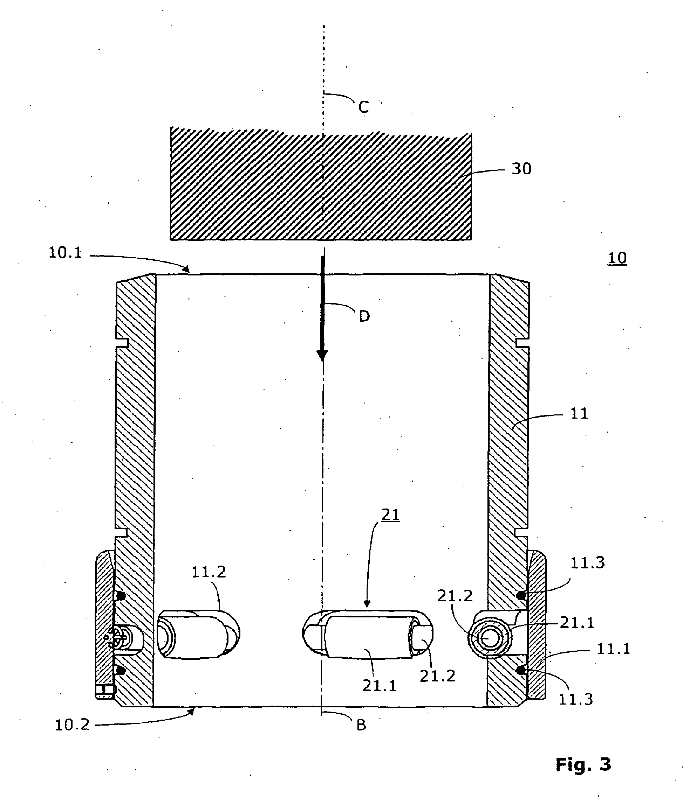

Die Vorrichtung 20 ist dazu ausgelegt, Medien zu verarbeiten, die bei einer Temperaturerhöhung eine Änderung in einen Zustand niedrigerer Viskosität erfahren, um damit die Fliessfähigkeit dieses Mediums zu erhöhen. Die Vorrichtung 20 umfasst ein spezielles Beschickungssystem 10 (z.B. ein Kerzenbeschickungssystem), das im Folgenden näher beschrieben wird. Das Beschickungssystem 10 ist zur Aufnahme des Mediums 30 (zum Beispiel in Form eine PUR-Kerze 30, siehe Fig. 3) ausgelegt.

Die Vorrichtung 20 ist mit einer Schmelzvorrichtung versehen, die eine lokale Temperaturerhöhung des Mediums 30 hervorruft, um einen Teil des Mediums 30 in einen Zustand niedrigerer Viskosität zu überführen.

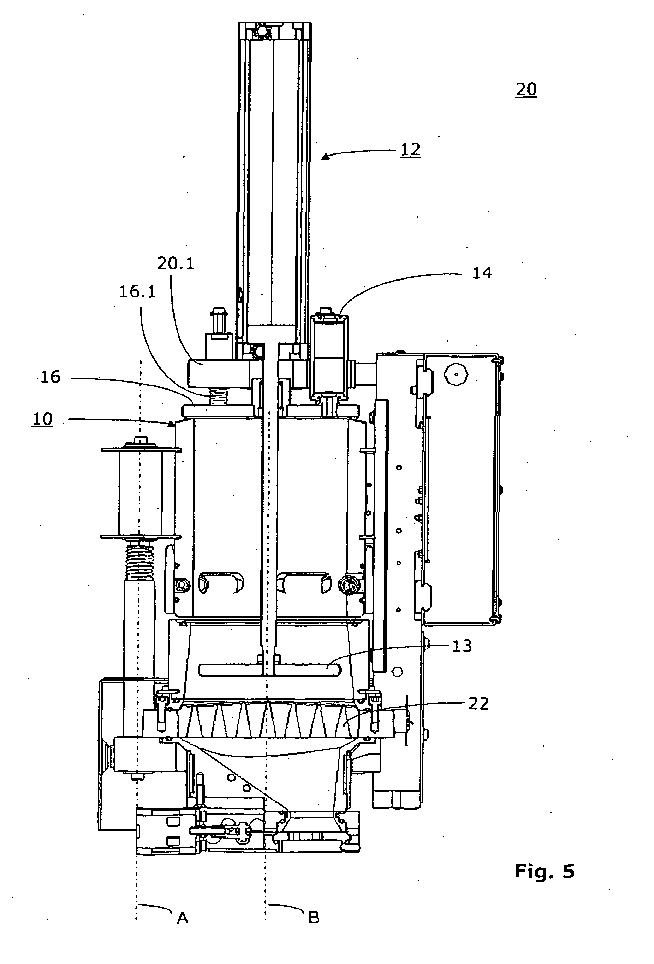

In dem vorliegenden Ausführungsbeispiel ist die Schmelzvorrichtung in einen Grill 22 integriert, der sich im unteren Austrittsbereich 19 der Vorrichtung 20 befindet. Der Grill 22 ist in Fig. 1 nur andeutungsweise sichtbar. In Fig. 5 ist der Grill 22 im Schnitt gezeigt. Die Heizmittel der Schmelzvorrichtung, z.B. in Form von Widerstandheizung, Flüssigkeitsheizung oder Heizpatrone, sind nicht gezeigt. Mit den Heizmitteln kann die Temperatur des Grills 22 durch eine Steuerung oder Regelung kontrolliert angehoben werden. Der Grill 22 befindet sich im Austrittsbereich 19 und hat Durchlassöffnungen für den geschmolzenen Teil des Mediums, d.h. für den Teil des Mediums mit niedrigerer Viskosität.

Die Vorrichtung 20 umfasst weiterhin eine Presse 12, die von oben her auf das schmelzbare Medium 30 einwirkt. Vorzugsweise kommt eine Inliner-Presse 12 zum Einsatz, wie in den Figuren gezeigt.

Weiterhin ist der Austrittsbereich 19 der Vorrichtung 20 mindestens im oberen Bereich so ausgebildet, dass der Mediumhalter 11 dicht mit dem Austrittsbereich 19 verbunden werden kann. In Fig. 1 zum Beispiel ist ein ringförmiger Anschlussbereich 19.1 gezeigt, der mit einer unteren Stirnseite 10.2 eines zylinderförmigen Kerzenhalters 11 des Beschickungssystems 10 in Wechselwirkung steht, wie noch beschrieben wird.

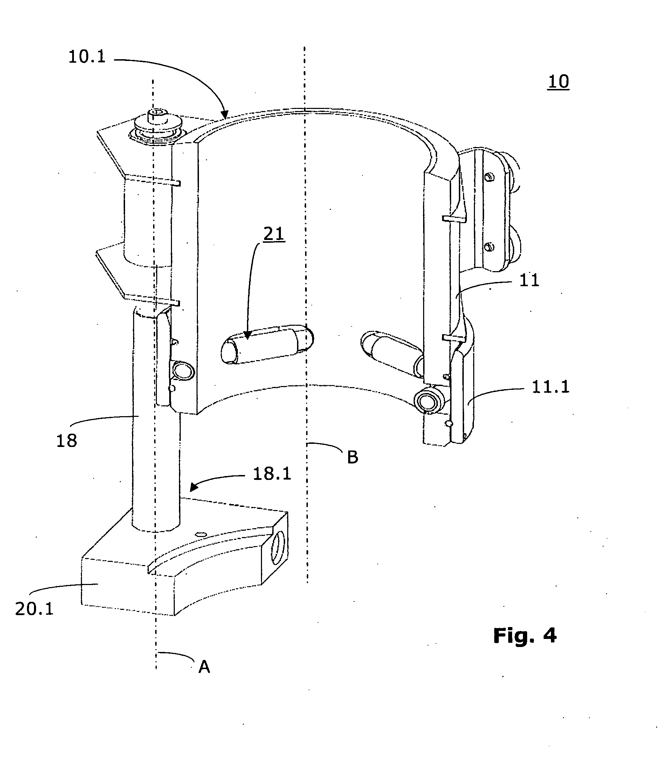

Das Beschickungssystems 10, hier auch als Aufnahmemittel 10 bezeichnet, umfasst in den verschiedenen Ausführungsformen einen zylindermantelförmigen Kerzenhalter 11. Genauer ausgedrückt hat der Kerzenhalter 11 annähernd die Form eines Zylinderrohres. In Fig. 3 ist dieses Zylinderohr im Schnitt gezeigt. In Fig. 4 ist eine Hälfte des Zylinderrohrs perspektivisch dargestellt. Der Kerzenhalter 11 ist mindestens an der unteren Stirnseite 10.2 offen, wie in Fig. 3 zu erkennen ist. Der Kerzenhalter 11 kann aber auch an beiden Stirnseiten 10.1 und 10.2 offen sein.

In diesem Zusammenhang ist angemerkt, dass der Kerzenhalter 11 auch eine andere Form und einen anderen Querschnitt, zum Beispiel einen rechteckigen Querschnitt, haben kann. Idealerweise ist die Form des Kerzenhalters 11 der Form der Klebstoffkerze 30 angepasst.

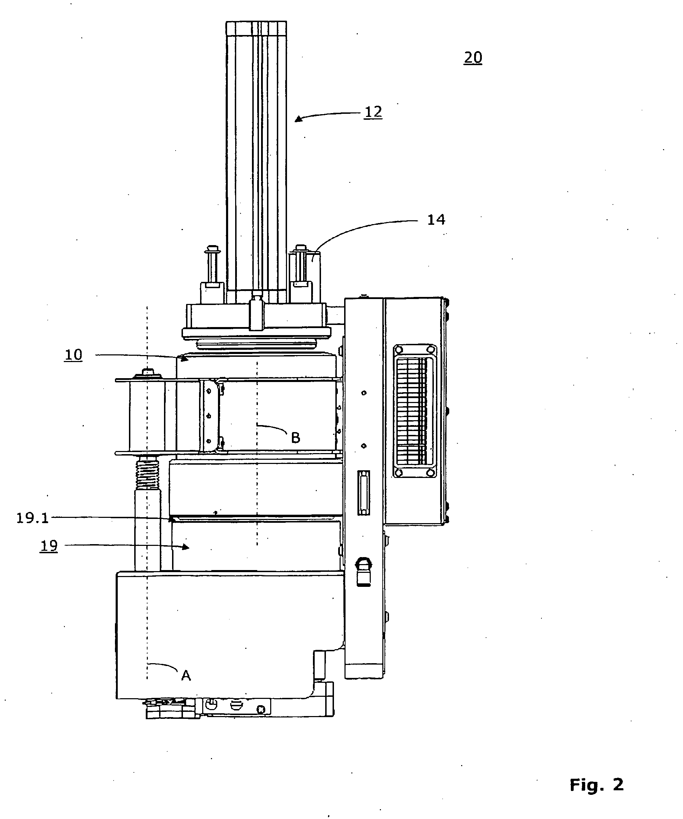

Der Kerzenhalter 11 hat eine Zylinderlängsachse B, die vertikal im Raum steht. Der Kerzenhalter 11 ist so aufgehängt, dass er um eine exzentrische Vertikalachse A schwenkbar ist. Zu diesem Zweck ist eine (Dreh-)Achse 18 vorgesehen, die mit einem unteren Ende 18.1 z.B. an einem Chassis 20.1 der Vorrichtung 20 drehbar befestigt ist. Der Kerzenhalter 11 kann durch diese Art der Aufhängung eine Schwenkbewegung (in Fig. 1 durch den Pfeil C angedeutet) um die Vertikalachse A machen. Mit dieser Schwenkbewegung C, kann der Kerzenhalter 11 aus einer Arbeitsstellung in eine Nachfüllstellung geschwenkt werden. In Fig. 1 ist die Nachfüllstellung und in Fig. 2 und Fig. 5 ist die Arbeitsstellung gezeigt.

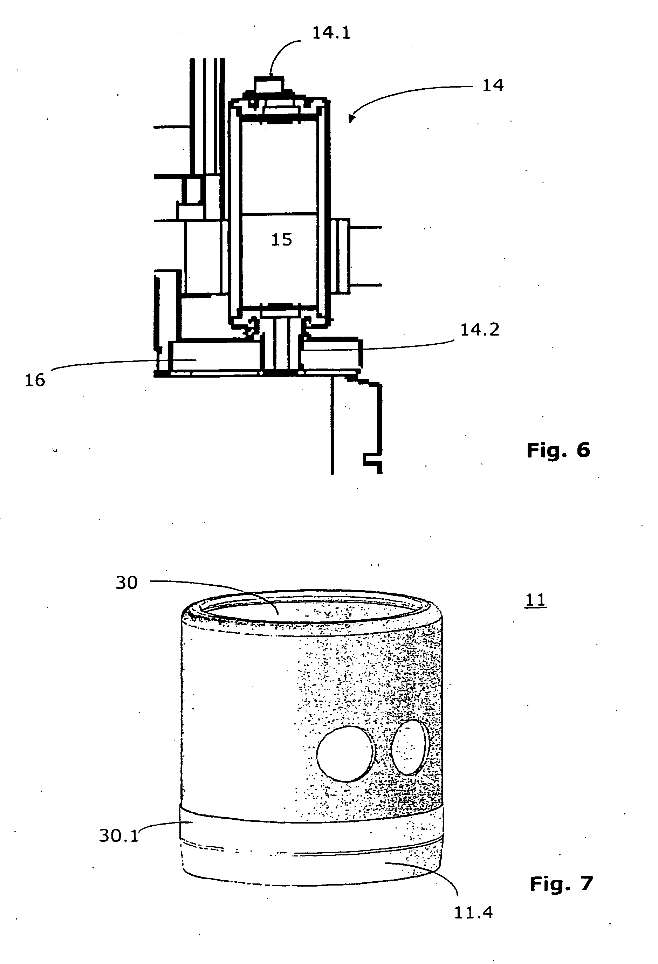

Es ist auch möglich, jedoch nicht erfindungsgemäß, den Kerzenhalter 11 so auszuführen, dass er komplett entnommen werden kann, um ihn dann mit der Kerze zu beschicken. Danach wird der Kerzenhalter 11 dann wieder in die Arbeitsstellung gebracht. In Fig. 7 ist ein ähnlicher Ansatz gezeigt, wobei der gezeigte Mediumhalter 11 dazu ausgelegt ist schmelzbares Granulat in einem sogenannten Inlinersack 30.1 aufzunehmen. Das Granulat 30 befindet sich in dem Sack 30.1, der in den Mediumhalter 11 eingesetzt und um den unteren Rand herum nach oben umgestülpt wird, wie in Fig. 7 gezeigt. In der gezeigten Ausführungsform der Erfindung ist der untere Randbereich des Mediumhalters 11 konisch ausgebildet. Dadurch ist es möglich, falls der obere Anschlussbereich 19.1 des Austrittsbereichs 19 entsprechend ausgebildet ist (Gegenstück mit Konusfläche), eine dichte Verbindung zwischen dem Mediumhalter 11 und dem Austrittsbereich 19 zu gewährleisten.

Je nach Ausführungsform kann eine Taste oder ein Schalter an der Vorrichtung 20 vorgesehen sein, um den Wechsel von der Arbeitsstellung in die Nachfüllstellung vorzubereiten. Nach dem Betätigen dieses Tasters oder Schalters, kann zum Beispiel die Deckelplatte 16 eine Rückstellbewegung machen, um den Mediumhalter 11 frei zu geben.

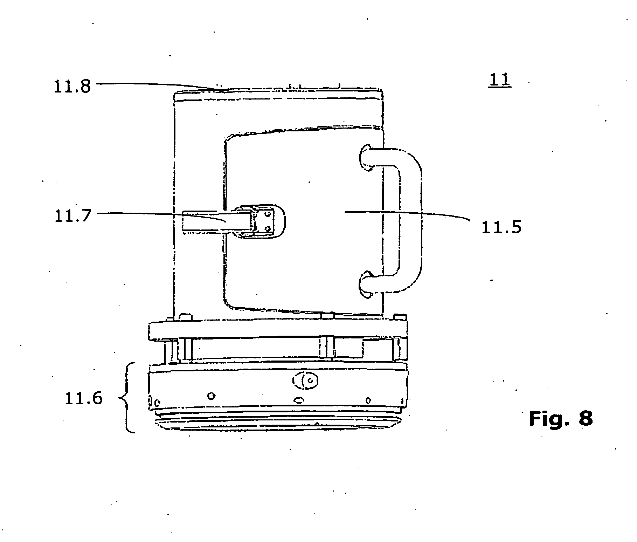

Die Arbeitsstellung zeichnet sich dadurch aus, dass der Mediumhalter 11 mit seiner unteren Stirnseite 10.2 dicht auf dem oberen (z.B. ringförmigen) Anschlussbereich 19.1 aufsitzt (siehe Fig. 2). Wie in Fig. 1 gezeigt, ist der Anschlussbereich 19.1 bei der gezeigten Ausführungsform ringförmig ausgebildet und kann mit Dichtungsmitteln versehen sein, um die untere Stirnseite 10.2 des Mediumhalters 11 dicht auf den Anschlussbereich 19.1 aufsetzen zu können. Alternativ oder zusätzlich kann auch die untere Stirnseite 10.2 des Mediumhalters 11 mit Dichtungsmitteln versehen sein. In Fig. 8 ist eine entsprechende Ausführungsform des Mediumhalters 11 gezeigt, die sich dadurch auszeichnet, dass im Bereich 11.6 Dichtungsmittel vorgesehen sind.

Die obere Stirnseite 10.1 des Mediumhalters 11 wird bei einem Teil der Ausführungsformen durch eine Deckelplatte 16 abgedichtet, die in Fig. 5 gut zu erkennen ist. Die Deckelplatte 16 und/oder die obere Stirnseite 10.1 des Mediumhalters 11 sind mit Dichtungsmitteln versehen, um die obere Stirnseite 10.1 des Mediumhalters 11 gegenüber der Deckelplatte 16 abdichten zu können. Die Deckelplatte 16 kann zum Beispiel mechanisch am Chassis 20.1 der Vorrichtung 20 befestigt sein. Vorzugsweise werden Federelemente (z.B. im Form von Druckfedern 16.1) vorgesehen, um die Deckelplatte 16 auf den Kerzenhalter 11 in der Arbeitsstellung zu drücken.

Bei einem anderen Teil der Ausführungsformen ist ein fixer Deckel oder Abschluss 11.8 an der oberen Stirnseite 10.1 des Mediumhalters 11 vorgesehen (siehe zum Beispiel Fig. 8).

Die Nachfüllstellung zeichnet sich bei bevorzugten Ausführungsformen dadurch aus, dass der Mediumhalter 11 herausgeschwenkt ist und von der oberen und/oder unteren Stirnseite 10.1, 10.2 her mit dem schmelzbaren Medium 30, z.B. in Form einer Klebstoffkerze, befüllbar ist. Die Nachfüllung oder Beschickung von oben ist in Fig. 3 schematisch angedeutet. Das Medium 30 in Form einer Klebstoffkerze ist oberhalb des Mediumhalters 11 angedeutet. Der Durchmesser der Klebstoffkerze ist etwas kleiner als der Innendurchmesser des Mediumhalters 11. Beim Nachfüllen oder Beschicken kann die Klebstoffkerze zum Beispiel von oben her (wie durch den Pfeil D angedeutet) in den zylinderförmigen Innenraum des Mediumhalters 11 eingeschoben werden. Es sind Kerzenbremsen 21 vorgesehen, die dazu dienen ein Hindurchrutschen der Kerze durch den Mediumhalter 11 zu verhindern.

In der gezeigten Ausführungsform weist jede der Kerzenbremsen 21 eine Walze 21.1 und eine Horizontalachse 21.2 auf. Die Horizontalachse 21.2 ist tangential horizontal am Mediumhalter 11 angeordnet. Ein Teil des äusseren Umfangs der Walzen 21.1 ragt in den Innenraum des Mediumhalters 11 hinein. Vorzugsweise sind die Horizontalachsen 21.2 der Kerzenbremsen 21 federnd gelagert und können sich dadurch etwas in radialer Richtung nach aussen verschieben. Die federnde Lagerung drückt die Walzen 21.1 radial nach innen wenn keine Kerze vorhanden ist. Durch eine geeignete Einstellung oder Planung der federnden Lagerung kann sichergestellt werden, dass die Kerzen nicht aufgrund ihres Eigengewichts durch den Mediumhalter 11 hindurch nach unten rutschen.

Vorzugsweise sind die Kerzenbremsen 21 so ausgelegt, dass sie nur von oben nach unten wirken. D.h., wenn zum Beispiel eine Kerze von unten her eingeschoben wird, dann weichen die Kerzenbremsen 21 zurück. Sobald die Kerze dann losgelassen wird, greifen die Kerzenbremsen 21 und es wird ein Durchrutschen nach unten verhindert.

Statt der gezeigten Walzen 21.1. können aber auch Bremsbacken, Bremskeile oder dergleichen eingesetzt werden.

Um die Montage der Kerzenbremsen 21 zu erleichtern, wurden in dem Zylindermantel des Mediumhalters 11 von aussen her längliche Durchbrüche 11.2 vorgesehen. Diese Durchbrüche 11.2 haben jedoch den Nachteil, dass Umgebungsluft in das Innere des Mediumhalters 11 eindringt, was durch die darin enthaltene Feuchtigkeit zu unerwünschten Vernetzungserscheinungen führen kann. Die Durchbrüche 11.2 müssen daher abgedichtet werden. Vorzugsweise wird ein Schrumpfschlauch oder ein gürtelartiger Ring 11.1 aussen um den Mediumhalter 11 herum gelegt. Der Schlauch oder Ring 11.1 muss eine Höhe haben, die gewährleistet, dass alle Durchbrüche 11.2 abgedichtet sind. Es können spezielle Dichtungen 11.3 in den äusseren Umfang vom Mediumhalter 11 eingelegt sein, wie in Fig. 3 gezeigt.

Durch die verschiedenen genannten Massnahmen und Merkmale der Erfindung wird gewährleistet, dass in der Arbeitsstellung keine Umgebungsluft in den Innenbereich des Mediumhalters 11 und vor allem in den Innenbereich der Schmelzeinrichtung 22 gelangt.

Wird nun die Presse 12 betätigt, die von oben her auf das schmelzbare Medium 30 einwirkt, so muss gewährleistet sein, dass von oben her Luft nachströmen kann, weil sonst ein Unterdruck entstehen würde, da der gesamte Innenraum luftdicht abgeschlossen ist. Gemäss Erfindung wird für das Nachströmen von Luft ein spezieller Lufttrockner 14 (Trocknungsbehälter genannt) vorgesehen. Dieser Lufttrockner 14 sitzt vorzugsweise im Bereich der Deckelplatte 16 und umfasst eine Lufteintrittsöffnung 14.1 und eine Luftaustrittsöffnung 14.2. Im Inneren des Trocknungsbehälters 14 ist ein hydrophiles Medium 15, z.B. Silikatgel, vorgesehen, das von der Umgebungsluft durchströmt wird und dann durch die Luftaustrittsöffnung 14.2 und die Deckelplatte 16 als getrocknete Luft in einen oberen Bereich des Innenbereichs 11 gelangt. Der Lufttrockner 14 kann aber auch direkt an dem Deckel oder der Abdeckung 11.8 des Mediumhalters 11 angebracht sein.

Vor den Trocknungsbehälter 14 kann ein Membran- oder Absorptionstrockner vorgeschaltet sein, um die Trocknungswirkung weiter zu erhöhen.

Die Presse weist eine horizontale Pressplatte 13 auf, die in der Arbeitsstellung durch ein Betätigen der Presse 12 vertikal nach unten zugestellt werden kann. Durch dieses Zustellen wird das schmelzbare Medium 30 (in Form einer Kerze) nach unten in Richtung Grill 22 gedrückt. Dort gerät es in Kontakt mit dem Grill 22 und wird geschmolzen.

Der Austrittsbereich 19 unterhalb des Grills 22 der Schmelzeinrichtung weist eine Austrittsöffnung auf, deren Öffnungsquerschnitt durch das Einbringen eines Filters oder Gitters an die Viskosität des momentan in dem Mediumhalter 11 verwendeten schmelzbaren Mediums 30 anpassbar ist. Dadurch kann quasi ein gewisser Gegendruck oder Widerstand gewährleistet werden, der wiederum sicher stellt, dass der Austrittsbereich 19 nie ganz leer läuft. Es kann aber auch eine Art Siphon im Austrittsbereich 19 angeordnet sein, um die gleiche Wirkung zu erzielen. Durch diese Massnahme(n) wird sicher gestellt, dass nicht durch die Austrittsöffnung, durch die der geschmolzene Klebstoff austritt, Umgebungsluft eindringt. Der im Austrittsbereich 19 verbleibende Restklebstoff bildet somit eine Art Pfropfen und dichtet den Innenraum der Vorrichtung 20 nach unten hin ab.

Alternativ oder zusätzlich zu diesen Massnahme(n) kann die Austrittsöffnung mit einem beweglichen Schieber luftdicht verschliessbar sein. Dieser Schieber kann zum Beispiel von der Steuerung der Vorrichtung 20 bewegt werden.

Die Vorrichtung 20 zeichnet sich je nach Ausführungsform dadurch aus, dass das Beschickungssystem 10 Kerzenbremsen 21 aufweist. Dadurch, dass diese Bremsen 21 zum Einsatz kommen, braucht es keine Kühlvorrichtung, um die Durchlassöffnungen des Grills 22 aktiv abkühlen zu können, um das ungewollte Aufschmelzen von weiterem Klebstoff zu verhindern. Es kann aber, falls gewünscht, eine Kühlvorrichtung im Austrittsbereich 19, z.B. im Grill 22, vorgesehen werden.

Bei den gezeigten Ausführungsformen ist die (Inliner-)Presse 12 am Chassis 20.1 befestigt. Diese Presse 12 kann so ausgelegt sein, dass von oben mittels einer Pressplatte 13 ein kontrollierter Druck auf das Medium 30 ausgeübt werden kann, wenn sich das Beschickungssystem 10 in der Arbeitsstellung befindet. Vorzugsweise ist die (Inliner-)Presse 12 mit einem Pneumatikzylinder versehen. Die Presse 12 kann je nach Ausführungsform von einer erfindungsgemässen Steuerung angesteuert werden.

In einer weiteren bevorzugten Ausführungsform der Erfindung ist der Mediumhalter 11 aus zwei Segmenten (Halbrohren) aufgebaut, die gegeneinander gesetzt werden, um ein komplettes Zylinderrohrelement zu ergeben. Der Mediumhalter 11 kann aber auch aus einem einzigen rohrförmigen Stück mit einer Türe 11.5 gefertigt sein, wie in Fig. 8 gezeigt. Vorzugsweise kommen (Schnell-)Spannmittel 11.7 zum Einsatz, um die beiden Halbrohre oder die Türe 11.5 einfach und schnell lösen und wieder montieren zu können. Durch diese baulichen Massnahmen kann die Reinigung des Beschickungssystems 10 deutlich vereinfacht werden.

Die in Fig. 8 gezeigte Ausführungsform kann auch mit Granulat befüllt werden, wobei in diesem Fall ein Inlinersack 30.1 (ähnlich wie in Fig. 7) zum Einsatz kommt.

Durch die beschriebene Anordnung ist es möglich, stets nur einen kleinen Teil des Mediums 30 in kontrollierter Art und Weise aufzuschmelzen, in dem die Schmelzvorrichtung das Medium 30 im Bereich des Grills 22 lokal erwärmt. Ein Anteil des aufgeschmolzenen Teils des Mediums tritt durch die Durchlassöffnungen hindurch in den Austrittsbereich 19.

In den gezeigten Ausführungsform ist die Schmelzvorrichtung in Form eines Grills 22 mit Heizpatronen oder Widerstandheizung realisiert. Die Schmelzvorrichtung ist also in den Grill 22 integriert, bzw. mit diesem Grill 22 verbunden. Die Schmelzvorrichtung kann aber auch separat vom Grill 22 ausgeführt sein.

In einer bevorzugten Ausführungsform ist die Steuerung/Regelung so ausgelegt, dass keine Temperaturen oberhalb einer kritischen Temperatur erzeugt werden. Die kritische Temperatur kann für PUR zum Beispiel bei ca. 160°C fest gelegt werden.

Es ist ein Vorteil der Erfindung, dass das Beschickungssystem 10 selbst in komplex aufgebauten Gesamtsystemen (zum Beispiel in Buchdruckstrassen) durch das Herausschwenken des Beschickungssystem 10 einfach von unten 10.2, oben 10.1, oder durch eine Türe 11.5 beschickt werden kann. Ausserdem reduziert sich durch den speziellen Aufbau der einzelnen Elemente der Reinigungsaufwand deutlich.

Ein fliessfähiges Medium, worunter im Rahmen der vorliegenden Beschreibung Medien mit temperaturabhängigen Viskositäten, also auch Pasten zu verstehen sind, ist ein Medium, das auf eine Fördertemperatur erwärmt werden muss, um eine genügende Fliessfähigkeit zu erreichen, und das anschliessende Abgeben dieses Mediums zu ermöglichen.

Die Vorrichtung 20 kann so ausgelegt werden, dass von wenigen Gramm bis zu 15kg/h Medium aufgeschmolzen werden können.

Die Erfindung eignet sich besonders zum Abgeben bzw. Verarbeiten von Klebstoff mit temperaturunstabiler Viskosität. Es können gemäss Erfindung problemlos auch feuchtigkeitsvernetzende Klebstoffe abgeben werden.

Die Erfindung eignet sich besonders für PUR-Kerzen 30, die ein Gewicht von bis zu 5 kg haben. Besonders geeignet ist die Vorrichtung 20 für Kerzen 30, die um die 2 bis 3 kg wiegen.

Erfindungsgemässe Vorrichtungen 20 werden häufig mit PUR Kerzen und mit Standard-Hotmelt Klebstoffen in Granulatform betrieben. In einem solchen Fall können zwei verschiedene Mediumhalter 11 zum Einsatz kommen, die durch wenige Handgriffe ausgetauscht werden können.

Die Erfindung eignet sich nicht nur für das Verarbeiten von PUR- oder anderen feuchtigkeitsvernetzenden Medien, sondern auch für Medien, die mit katalysierenden Gasen reagieren (aushärten).

Die Vorrichtung 20 kann dazu eingesetzt werden, um z.B. im Bereich der Buchbinderei ein Leimbecken zu befüllen. Typischerweise läuft eine Walze durch ein solches Leimbecken, um den Buchrücken mit einem Leimfilm zu benetzen. Damit lassen sich günstige, zuverlässige und einfach handhabbare Anlagen realisieren.
(Kerzen)beschickungssystem 10
obere Stirnseite 10.1
untere Stirnseite 10.2
Medium (Kerzen)-halter 11
Ring 11.1
Durchbrüche 11.2
Dichtungen 11.3
Konischer Anschlussbereich 11.4
Türe 11.5
Anschlussbereich 11.6
Schnellspannvorrichtung 11.7
Abschluss 11.8
Presse 12
Pressplatte 13
Lufttrockner 14
Lufteintrittsöffnung 14.1
Luftaustrittsöffnung 14.2
Trocknungsbehälter 14
hydrophiles Medium 15
Deckelplatte 16
Druckfedern 16.1
Achse 18
unteres Ende 18.1
Austrittsbereich 19
(ringförmiger) oberer Anschlussbereich 19.1
Vorrichtung 20
Chassis 20.1
Kerzenbremsen 21
Walze 21.1
Horizontalachse 21.2
Grill 22
Schmelzeinrichtung 22
PUR-Kerze 30
schmelzbares Medium 30
Inlinersack 30.1
Vertikalachse A
Zylinderlängsachse B
Schwenkbewegung C
Beschickungsrichtung D

## Patentansprüche

1. Vorrichtung (20) zum Bereitstellen eines geschmolzenen, fliessfähigen Mediums,
- mit einem Aufnahmemittel (10) für ein schmelzbares Medium (30),
- mit einem Austrittsbereich (19), der mit einer Schmelzeinrichtung (22) versehen ist, um einen Teil des schmelzbaren Medium (30) zu schmelzen und in das fliessfähige Medium umzuwandeln, und
- mit einer Presse (12), die von oben her auf das schmelzbare Medium (30) einwirkt,
- der Austrittsbereich (19) einen oberen Anschlussbereich (19.1) aufweist,
- die Vorrichtung (20) einen Trocknungsbehälter (14) umfasst,
- die Aufnahmemittel (10) einen Mediumhalter (11) umfassen, der mindestens an einer unteren Stirnseite (10.2) offen ist,
**dadurch gekennzeichnet, dass**
trockene Luft durch den Trocknungsbehälter (14) in einen Innenbereich des Mediumhalters (11) oberhalb des schmelzbaren Mediums (30) eindringen kann, und wobei der Mediumhalter (11) aus einer Arbeitsstellung in eine Nachfüllstellung bringbar ist, und
- der Mediumhalter (11) im Bereich einer oberen Stirnseite (10.1) mindestens in der Arbeitsstellung dicht verschließbar ist
- der Mediumhalter (11) in der Arbeitsstellung mit seiner unteren Stirnseite (10.2) dicht auf dem oberen Anschlussbereich (19.1) aufsitzt, und
- in der Nachflüllstellung mit dem schmelzbaren Medium (30) befüllbar ist,
- der Mediumhalter (11) um eine exzentrische Vertikalachse (A) schwenkbar angeordnet ist und durch eine Schwenkbewegung (C) um die Vertikalachse (A) aus der Arbeitsstellung in die Nachfüllstellung schwenkbar ist, und
- dass der Mediumhalter (11) im Bereich seiner Innenwand eine oder mehrere Kerzenbremsen (20) aufweist, um das schmelzbare Medium (30) zu fixieren.

2. Vorrichtung (20) nach Anspruch 1, **dadurch gekennzeichnet,**
**dass** der Mediumhalter (11) in der Arbeitsstellung an seiner oberen Stirnseite (10.1) durch eine zustellbare Deckelplatte (16) abdichtbar ist.

3. Vorrichtung (20) nach einem der vorhergehenden Ansprüche, **dadurch gekennzeichnet, dass** der Mediumhalter (11) in der Nachfüllstellung
- von der oberen und/oder unteren Stirnseite (10.1, 10.2) her mit dem schmelzbaren Medium (30) befüllbar ist, oder
- durch eine Türe (11.5) mit dem schmelzbaren Medium (30) befüllbar ist.

4. Vorrichtung (20) nach einem der vorhergehenden Ansprüche, **dadurch gekennzeichnet, dass** die Vorrichtung (20) so ausgeführt sind, dass in der Arbeitsstellung keine Umgebungsluft in den Innenbereich der Schmelzeinrichtung (22) gelangt.

5. Vorrichtung (20) nach einem der vorhergehenden Ansprüche, **dadurch gekennzeichnet, dass** es sich bei dem Mediumhalter (11) um einen Kerzenhalter (11) handelt, der im Wesentlichen zylinderförmig ausgestaltet und der zur Aufnahme einer zylinderförmigen Klebstoffkerze (30) ausgelegt ist.

6. Vorrichtung (20) nach einem der vorhergehenden Ansprüche 1 - 4, **dadurch gekennzeichnet, dass** der Mediumhalter (11) so ausgestaltet ist, dass er zur Aufnahme des schmelzbaren Mediums (30) in Granulatform ausgelegt ist, wobei das schmelzbare Medium (30) zusammen mit einem Inlinersack (30.1) in den Mediumhalter (11) einbringbar ist.

7. Vorrichtung (20) nach einem der vorhergehenden Ansprüche, **dadurch gekennzeichnet, dass** der Trocknungsbehälter (14) mit einem hydrophilen Medium (15) gefüllt und der Trocknungsbehälter (14) so angeordnet ist, dass Umgebungsluft in den Trocknungsbehälter (14) eindringt, das hydrophile Medium (15) durchströmt und dann als getrocknete Luft in den Innenbereich oberhalb des schmelzbaren Mediums (30) des Mediumhalters (11) gelangt.

8. Vorrichtung (20) nach Anspruch 7, **dadurch gekennzeichnet, dass** es sich bei dem hydrophilen Medium (15) um ein Silikat, vorzugsweise ein Silikatgel, handelt.

9. Vorrichtung (20) nach Anspruch 1, **dadurch gekennzeichnet,**
**dass** die Presse eine horizontale Pressplatte (13) umfasst, die in der Arbeitsstellung durch ein Betätigen der Presse (12) vertikal nach unten zugestellt werden kann und durch dieses Zustellen das schmelzbare Medium (30) nach unten in Richtung Schmelzeinrichtung (22) drückt.

10. Vorrichtung (20) nach Anspruch 1, **dadurch gekennzeichnet, dass** jede der Kerzenbremsen (21) eine Walze (21.1) und eine Horizontalachse (21.2) aufweist, wobei die Horizontalachse (21.2) am Umfang des Mediumhalters (11) angeordnet sind.

11. Vorrichtung (20) nach einem der vorhergehenden Ansprüche, **dadurch gekennzeichnet, dass** der Austrittsbereich (19) unterhalb der Schmelzeinrichtung (22) eine Austrittsöffnung aufweist,
- deren Öffnungsquerschnitt durch das Einbringen eines Filters oder Gitters an die Viskosität des momentan in dem Mediumhalter (11) verwendeten schmelzbaren Mediums (30) anpassbar ist, und/oder
- deren Ausflusswiderstand durch einen Siphon vorgebbar ist.

12. Vorrichtung (20) nach einem der vorhergehenden Ansprüche, **dadurch gekennzeichnet, dass** es sich bei dem schmelzbaren Medium (30) um einen Polyurethankleber handelt, der feuchtigkeitsvernetzend ist.

## Claims

1. Device (20) for providing a molten, free-flowing medium,
- with receptacle means (10) for a meltable medium (30),
- with an exit area (19), which is provided with a melting device (22), in order to melt a part of the meltable medium (30) and convert it into the free-flowing medium, and
- with a press (12), which acts from above on the meltable medium (30),
- the exit area (19) having an upper connection area (19.1),
- the device (20) comprising a drying container (14),
- the receptacle means (10) comprising a medium holder (11), which is open at least on a bottom front side (10.2),
**characterized in that**
dry air can penetrate through the drying container (14) into an inner area of the medium holder (11) above the meltable medium (30), and whereby the medium holder (11) is able to be moved from an operating position into a refilling position, and
- the medium holder (11) is tightly closable in the area of an upper front side (10.1) at least in the operating position,
- the medium holder (11) in the operating position with its lower front side (10.2) is seated tightly on the upper connection area (19.1), and
- is fillable with the meltable medium (30) in the refilling position,
- the medium holder (11) is situated so it is pivotable around an eccentric vertical axis (A) and is pivotable by a pivot movement (C) around the vertical axis (A) from the operating position into the refilling position, and
- the medium holder (11) has one or more cartridge brakes (20) in the area of its inner wall in order to fix the meltable medium (30).

2. Device (20) according to claim 1, **characterized in that** in the operating position the medium holder (11) can be sealed on its upper front side (10.1) by a cover plate (16), which can be advanced..

3. Device (20) according to one of the preceding claims, **characterized in that**, in the refilling position, the medium holder (11)
- is fillable from the upper and/or lower front sides (10.1, 10.2) with the meltable medium (30), or
- is fillable through a door (11.5) with the meltable medium (30).

4. Device (20) according to one of the preceding claims, **characterized in that** the device (20) is implemented so that no ambient air reaches the inner area of the melting unit (22) in the operating position.

5. Device (20) according to one of the preceding claims, **characterized in that** the medium holder (11) is a cartridge holder (11), which is implemented as essentially cylindrical and is designed to receive a cylindrical adhesive cartridge (30).

6. Device (20) according to one of the preceding claims 1 - 4, **characterized in that** the medium holder (11) is implemented so that it is designed for receiving the meltable medium (30) in granule form, the meltable medium (30) being able to be introduced together with a liner bag (30.1) into the medium holder (11).

7. Device (20) according to one of the preceding claims, **characterized in that** the drying container (14) is filled with a hydrophilic medium (15) and the drying container (14) is situated so that ambient air penetrates into the drying container (14), flows through the hydrophilic medium (15), and then reaches the inner area above the meltable medium (30) of the medium holder (11) as dried air.

8. Device (20) according to claim 7, **characterized in that** the hydrophilic medium (15) is a silicate, preferably a silicate gel.

9. Device (20) according to claim 1, **characterized in that** the press comprises a horizontal press plate (13), which can be advanced vertically downward in the operating position by actuating the press (12) and presses the meltable medium (30) downward in the direction of the melting unit (22) by this advance.

10. Device (20) according to claim 1, **characterized in that** each of the cartridge brakes (21) has a roller (21.1) and a horizontal axis (21.2), the horizontal axes (21.2) being situated on the periphery of the medium holder (11).

11. Device (20) according to one of the preceding claims, **characterized in that** the exit area (19) has an exit opening below the melting unit (22),
- whose opening cross-section is adaptable to the viscosity of the meltable medium (30) currently used in the medium holder (11) by introducing a filter or lattice, and/or- whose outflow resistance is predefinable by a siphon.

12. Device (20) according to one of the preceding claims, **characterized in that** the meltable medium (30) is a polyurethane adhesive which is condensation-curable.

## Revendications

1. Dispositif (20) permettant de mettre à disposition un milieu fondu apte à l'écoulement,
- comportant un moyen de réception (10) d'un milieu fusible (30),
- comportant une zone de sortie (19) qui est munie d'un dispositif de fusion (22) afin de fondre une partie du milieu fusible (30) et de le convertir en milieu apte à l'écoulement, et
- comportant une presse (12) qui agit depuis le dessus sur le milieu fusible (30),
- la zone de sortie (19) présentant une zone de raccordement supérieure (19.1),
- le dispositif (20) comportant un réservoir de séchage (14),
- le moyen de réception (10) comportant un support de milieu (11) qui est ouvert au moins au niveau d'une face terminale inférieure (10.2),
**caractérisé en ce que**
de l'air séché peut pénétrer par le réservoir de séchage (14) dans une zone interne du support de milieu (11) au-dessus du milieu fusible (30), et le support de milieu (11) pouvant être amené depuis une position de travail dans une position de remplissage, et **en ce que**
- le support de milieu (11) peut être fermé de façon étanche dans la zone d'une face terminale supérieure (10.1) au moins dans la position de travail,
- le support de milieu (11) dans la position de travail repose par sa face terminale inférieure (10.2) de façon étanche sur la zone de raccordement supérieure (19.1), et
- il peut être rempli avec le moyen fusible (30) dans la position de remplissage,
- le support de milieu (11) est disposé de façon à pivoter autour d'un axe vertical excentrique (A) et peut pivoter par un déplacement de pivotement (C) autour de l'axe vertical (A) depuis la position de travail dans la position de remplissage, et
- **en ce que** le support de milieu (11) présente dans la zone de sa paroi interne un ou plusieurs freins de cartouche (21) pour fixer le milieu fusible (30).

2. Dispositif (20) selon la revendication 1, **caractérisé en ce que** le support de milieu (11) peut dans la position de travail être rendu étanche au niveau de sa face terminale supérieure (10.1) par une plaque de couvercle réglable (16).

3. Dispositif (20) selon l'une des revendications précédentes, **caractérisé en ce que** le support de milieu (11) dans la position de remplissage,
- peut être rempli avec le milieu fusible (30) depuis la face terminale supérieure et/ou inférieure (10.1, 10.2), ou
- peut être rempli avec le milieu fusible (30) par une porte (11.5).

4. Dispositif (20) selon l'une des revendications précédentes, **caractérisé en ce que** le dispositif (20) est exécuté de façon à ce que, dans la position de travail, aucun air environnant ne parvienne dans la zone interne du dispositif de fusion (22).

5. Dispositif (20) selon l'une des revendications précédentes, **caractérisé en ce qu'**il s'agit concernant le support de milieu (11) d'un support de cartouche (11) qui est façonné de façon essentiellement cylindrique et qui est conçu pour loger une cartouche de colle (30) en forme de cylindre.

6. Dispositif (20) selon l'une des revendications précédentes 1 à 4, **caractérisé en ce que** le support de milieu (11) est façonné de façon telle qu'il est conçu pour recevoir le milieu fusible (30) sous la forme de granulés, le milieu fusible (30) pouvant être amené dans le support de milieu (11) par un sac à doublure interne (30.1).

7. Dispositif (20) selon l'une des revendications précédentes, **caractérisé en ce que** le réservoir de séchage (14) est rempli d'un milieu hydrophile (15) et le réservoir de séchage (14) est disposé de façon à ce que l'air ambiant pénètre dans le réservoir de séchage (14), traverse le milieu hydrophile (15) puis parvienne en tant qu'air séché dans la zone interne, au-dessus du milieu fusible (30), du support de milieu (11).

8. Dispositif (20) selon la revendication 7, **caractérisé en ce qu'**il s'agit concernant le milieu hydrophile (15) d'un silicate, de préférence d'un silicate en gel.

9. Dispositif (20) selon la revendication 1, **caractérisé en ce que** la presse comporte une plaque de presse horizontale (13) qui, dans la position de travail, peut être avancée verticalement vers le bas par un actionnement de la presse (12) et qui par cet avancement comprime le milieu fusible (30) vers le bas dans la direction du dispositif de fusion (22).

10. Dispositif (20) selon la revendication 1, **caractérisé en ce que** chaque frein de cartouche (21) présente un cylindre (21.1) et un axe horizontal (21.2), l'axe horizontal (21.2) étant disposé au niveau de la périphérie du support de milieu (11).

11. Dispositif (20) selon l'une des revendications précédentes, **caractérisé en ce que** la zone de sortie (19) présente sous le dispositif de fusion (22) une ouverture de sortie,
- dont la section d'ouverture peut être adaptée, par l'introduction d'un filtre ou d'une grille, à la viscosité instantanée du milieu fusible (30) utilisé dans le support de milieu (11), et/ou
- dont la résistance à l'écoulement peut être déterminée par un siphon.

12. Dispositif (20) selon l'une des revendications précédentes, **caractérisé en ce qu'**il s'agit concernant le milieu fusible (30) d'une colle de polyuréthane qui réticule à l'humidité.
